# EUROPEAN PATENT SPECIFICATION

(11) **EP 2 958 837 B1**
(45) Date of publication and mention of the grant of the patent: **12.12.2018**
(21) Application number: 14708321.6
(22) Date of filing: 21.02.2014
(51) Int. Cl.: B65G 65/23, B65F 1/14

(54) **A CONTAINER LIFT AND A METHOD OF EMPTYING A CONTAINER**
HEBEVORRICHTUNG FÜR CONTAINER UND VERFAHREN ZUM ENTLEEREN EINES CONTAINERS
DISPOSITIF DE LEVAGE POUR CONTENEURS ET PROCÉDÉ POUR VIDER UN CONTENEUR

(30) Priority: 21.02.2013 GB 201303119; 10.12.2013 GB 201321795
(43) Date of publication of application: 30.12.2015
(73) Proprietor: Whitham Mills Engineering Limited, Todmorden, Lancashire OL14 5DL (GB)
(72) Inventor: MOON, Malcolm, Preston Lancashire PR2 3JY (GB); MARTLAND, Brian, Chorley Lancashire PR7 5EJ (GB)
(74) Representative: McDonough, Jonathan
(86) International application number: PCT/GB2014/050516
(87) International publication number: WO 2014/128481

(56) References cited:
- EP-A1- 0 122 493
- EP-A1- 1 327 585
- WO-A1-01/05692
- NL-C2- 1 001 923
- NL-C2- 1 017 004
- US-A1- 2012 251 286
- US-B1- 6 565 307
- US-B1- 7 018 155

## Description

The present invention relates to a combination of a container lift and a container. More particularly, but not exclusively the present invention relates to a container lift comprising a primary pivot arm having a secondary pivot arm pivotally connected thereto, the secondary pivot arm comprising a connector for holding a container is substantially fixed relation to the secondary pivot arm. In a further aspect the present invention provides a method of emptying a container. More particularly, but not exclusively, the present invention provides a method of emptying a container comprising the steps of providing a container lift, connecting the container lift to a container having an aperture in at least one side and then pivoting the primary and secondary pivot arms of the container lift to orient the container in an unloading position such that a lower face of the container contains an aperture. further aspect of the invention there is provided a method of emptying a container comprising the steps of connecting the container to the primary pivot arm and pivoting the primary pivot arm to invert the container whilst pivoting the secondary pivot arm from the retracted to the extended position.

Supermarkets and the like often place cardboard boxes and other waste materials into a container in the form of a cage for recycling. The cage comprises a base, typically on castors having three cage side walls extending upwardly therefrom. The fourth side of the cage is an aperture which can be opened and closed by means of a door. The top face of the cage is also open so that the cage can be filled with material. In order to maintain the structural stability of the cage a reinforcement bar or similar extends from a top edge of one of the side walls to the top edge of the opposite side wall.

When the cage is full it is collected and transported to a remote location where it is emptied. it takes time to empty the cage and the staff cost for this process is a significant proportion of the recycling cost. It is desired to empty the cage as quickly as possible.

One solution to this problem is to employ a machine to simply tip the cage upside down. However, the reinforcement bar prevents larger items of waste material from exiting the cage and these need to be removed by hand.

US 6,565,307 discloses a transfer machine intended for transferring loads, especially containers. The transfer machine comprises a frame equipped with a wheelwork; a horizontal support plane located in connection with the frame for supporting the load during the transfer, and a vertical transfer apparatus for lifting the load on the support of the support plane and off the support of the support plane. The vertical transfer apparatus is arranged to lift and lower loads from the side of the transfer machine and thereby from the side of the support plane. It comprises a primary pivot arm having a primary arm pivot and a primary pivot mechanism for rotating the primary pivot arm; the primary pivot arm having a secondary pivot arm connected thereto by a secondary arm pivot and having a secondary pivot mechanism connected thereto for rotating the secondary pivot arm; the secondary pivot arm comprising a connector for holding a container in substantially fixed relation to the secondary pivot arm; the primary pivot mechanism being able to pivot the primary pivot arm in the opposite direction to the direction of pivoting of the secondary pivot arm by the secondary pivot mechanism.

The present invention seeks to overcome the problems of the prior art.

Accordingly, in a first aspect the present invention provides a combination of a container lift for emptying a container and a container, which has an aperture on one side, the container lift comprising
at least one primary pivot arm having a primary arm pivot connected thereto;
each primary pivot arm having a primary pivot mechanism connected thereto for rotating the primary pivot arm about the primary arm pivot;
each primary pivot arm having a secondary pivot arm connected thereto by a secondary arm pivot spaced apart from the primary arm pivot;
each secondary pivot arm having a secondary pivot mechanism connected thereto for rotating the secondary pivot arm about the secondary arm pivot;
each secondary pivot arm comprising a connector for holding the container in substantially fixed relation to the secondary pivot arm;
the primary pivot mechanism being adapted to pivot the primary pivot arm in the opposite direction to the direction of pivoting of the secondary pivot arm by the secondary pivot mechanism, the pivot mechanisms being adapted such that the secondary pivot arm pivots either simultaneously with or after the primary pivot arm to bring the container into an unloading position
   wherein when in the unloading position, the secondary pivot arm is arranged such that the side of the container comprising the aperture is a lower side through which the contents of the container can drop under gravity.

The container lift according to the invention can be used to lift and pivot a container such that one of the side walls of the container is a lower face. If this side wall is the side wall containing the aperture then the contents of the cage can simply drop out under gravity.

Preferably the pivot axes of the primary arm pivot and secondary arm pivot are parallel.

Preferably the container lift of the combination of container lift and container further comprises a fixed support member, the primary arm pivot being connected to the fixed support member.

Preferably the secondary pivot mechanism comprises an extensible member, preferably a piston, extending between the primary and secondary pivot arms.

Preferably the secondary pivot mechanism extends between the fixed support member and the secondary pivot arm.

Preferably the connector comprises first and second end stops spaced apart on the secondary pivot arm for receiving the container therebetween.

Preferably the container lift of the combination of container lift and container comprises first and second spaced apart primary pivot arms, each primary pivot arm having a secondary pivot arm connected thereto.

Preferably the container lift of the combination of container lift and container further comprises a waste chute extending between the first and second primary pivot arms.

Preferably the container lift of the combination of container lift and container further comprises a container connected to the secondary pivot arm.

In a further aspect of the invention there is provided a method of emptying a container having an aperture in one side comprising the steps of
providing a container lift, the container lift comprising
   at least one primary pivot arm having a primary arm pivot connected thereto;
   each primary pivot arm having a primary pivot mechanism connected thereto for rotating the primary pivot arm about the primary arm pivot;
   each primary pivot arm having a secondary pivot arm connected thereto by a secondary arm pivot spaced apart from the primary arm pivot;
   each secondary pivot arm having a secondary pivot mechanism connected thereto for rotating the secondary pivot arm about the secondary arm pivot;
   each secondary pivot arm comprising a connector for holding the container in substantially fixed relation to the secondary pivot arm;
   the primary pivot mechanism being adapted to pivot the primary pivot arm in the opposite direction to the direction of pivoting of the secondary pivot arm by the secondary pivot mechanism, the pivot mechanisms being adapted such that the secondary pivot arm pivots either simultaneously with or after the primary pivot arm to bring the container into an unloading position;
connecting the container to the secondary pivot arm with the aperture facing towards the primary pivot arm;
pivoting the primary and secondary pivot arms in opposite directions about the primary arm pivot and secondary arm pivot respectively with the secondary pivot arm being pivoted either simultaneously with or after the primary pivot arm to pivot the container to an unloading position;
wherein the container is connected to the secondary pivot arm such that when in the unloading position the side of the container comprising the aperture is a lower side through which the contents of the container can drop under gravity.

Preferably the primary pivot arm is pivoted through more than 90 degrees and the secondary pivot arm is pivoted partially in the opposite direction.

Preferably the primary pivot arm is pivoted from an initial substantially vertical orientation through the horizontal and the secondary pivot arm is pivoted back to the horizontal.

The present invention will now be described by way of example only and not in any limitative sense with reference to the accompanying drawings in which
Figure 1 shows a container in the form of a cage;
Figure 2 shows a container lift according to a first embodiment of the invention in a first position;
Figure 3 shows the container lift of figure 2 in a second position;
Figure 4 shows the container lift of figures 2 and 3 with the container in the unloading position;
Figures 5(a) to 5(c) show a further embodiment of a container lift according to the invention emptying a container; and,
Figures 6(a) to 6(c) show the embodiment of the container lift of figures 5(a) to 5(c) employed in an alternative method of emptying a container according to the invention.

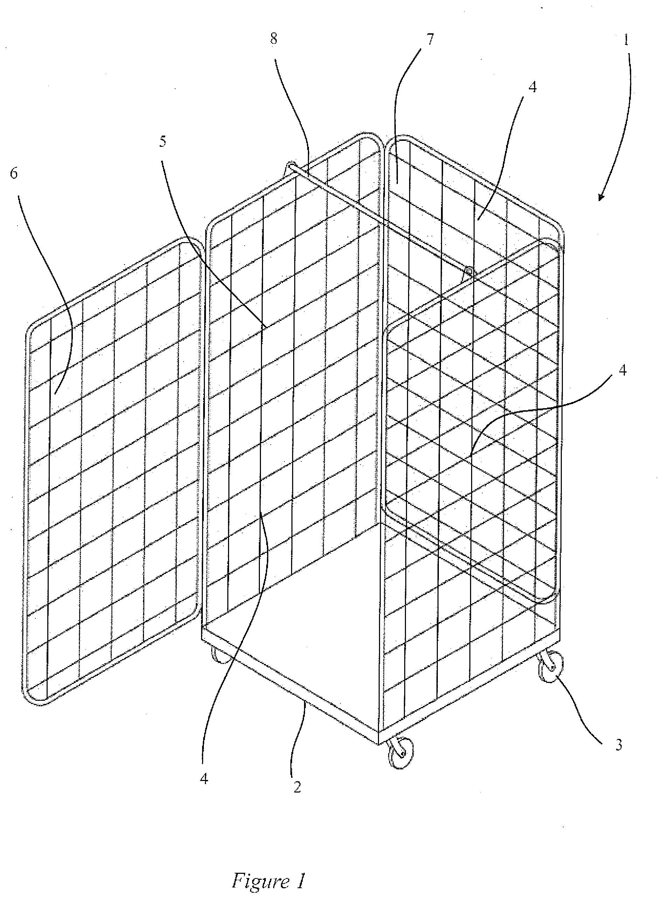

Shown in figure 1 is a container 1 in the form of a cage 1 for use in a container lift according to the invention. The cage 1 comprises a solid base 2 having a castor 3 in each corner. Extending upwards from the base 2 are three cage side walls 4. The fourth side of the cage is an aperture 5 which can be opened or closed by means of a door 6.

The top 7 of the cage 1 is open. However, in order to maintain the structural stability of the cage 1 a reinforcement bar 8 extends from the top edge of one side wall 4 to the top edge of the opposite side wall 4.

In use the door 6 of the cage 1 is opened and the cage 1 is filled from the side. Alternatively the cage 1 can be filled from the top provided the refuse can fit past the reinforcement bar 8.

Once filled the cage 1 is collected and transported to a remote location where it is emptied and returned.

Typically cages 1 are emptied by hand which is both time consuming and expensive. An alternative method is to connect the cage 1 to a machine which turns the cage 1 upside down. This however is not effective as large pieces of refuse can become trapped between the reinforcement bar 8 and the side 4 of the cage 1.

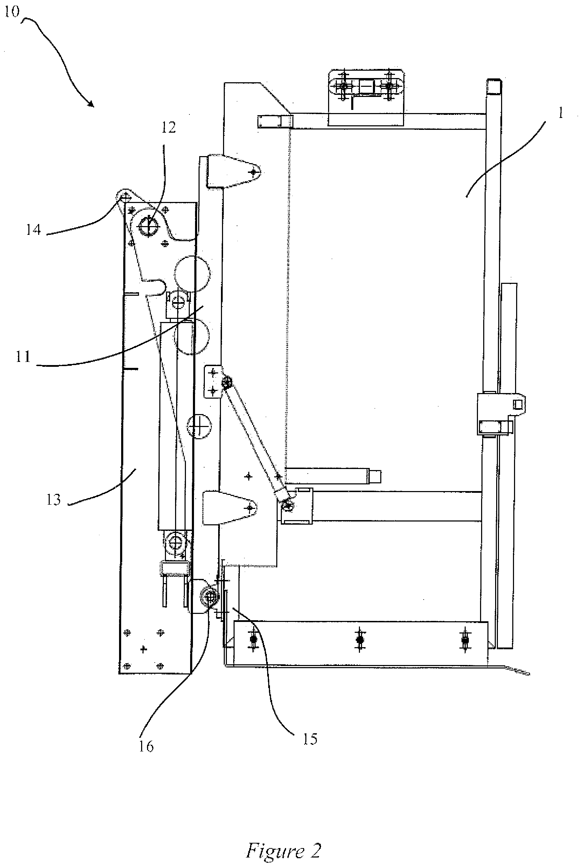

Shown in figure 2 is a container lifting apparatus 10 according to the invention. The apparatus 10 comprises a primary pivot arm 11 comparable in size to the height of the container 1. The primary pivot arm 11 is shown in the vertical position. The primary pivot arm 11 is adapted to pivot about a primary arm pivot 12 which is in turn connected to a fixed support member 13. A primary pivot mechanism 14 is adapted to pivot the primary pivot arm 11 about the primary arm pivot 12 as will be described in more detail below.

Connected to the primary pivot arm 11 is a secondary pivot arm 15. The secondary pivot arm 15 is connected to the primary pivot arm 11 by means of a secondary arm pivot 16 spaced apart from the primary arm pivot 12. The axis of rotation of the secondary arm pivot 16 is parallel to that of the primary arm pivot 12. The secondary pivot arm 15 comprises a main member 17 and a support member 18 upstanding therefrom.

Connected between the primary pivot arm 11 and the support member 18 of the secondary pivot arm 15 is a secondary pivot mechanism 19. The secondary pivot mechanism 19 in this embodiment is an extensible piston 19 the operation of which is described in more detail below. The secondary pivot arm 15 further comprises a connector for holding the container 1 in fixed relation to the secondary pivot arm 15 whilst the container lift 10 is in use. The connector comprises first and second end stops 20,21 spaced apart along the length of the secondary pivot arm 15.

Shown in figure 2 is one primary and secondary pivot arm pair 11,15. The container lift 10 according this embodiment comprises a further primary and secondary pivot arm pair 11,15 parallel to and spaced apart from the first pair. A waste chute 22 extends between the two primary pivot arms 11.

In use the door 6 of the cage 1 is opened and the cage 1 moved into position between the first and second end stops 20,21 of the secondary pivot arm 15 as shown. The open face 5 of the cage 1 faces towards the primary and secondary pivot arms 11,15.

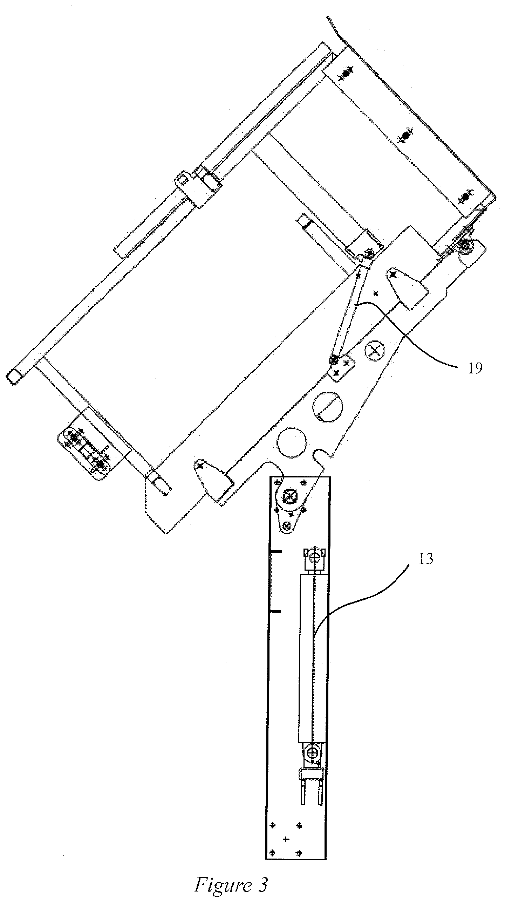

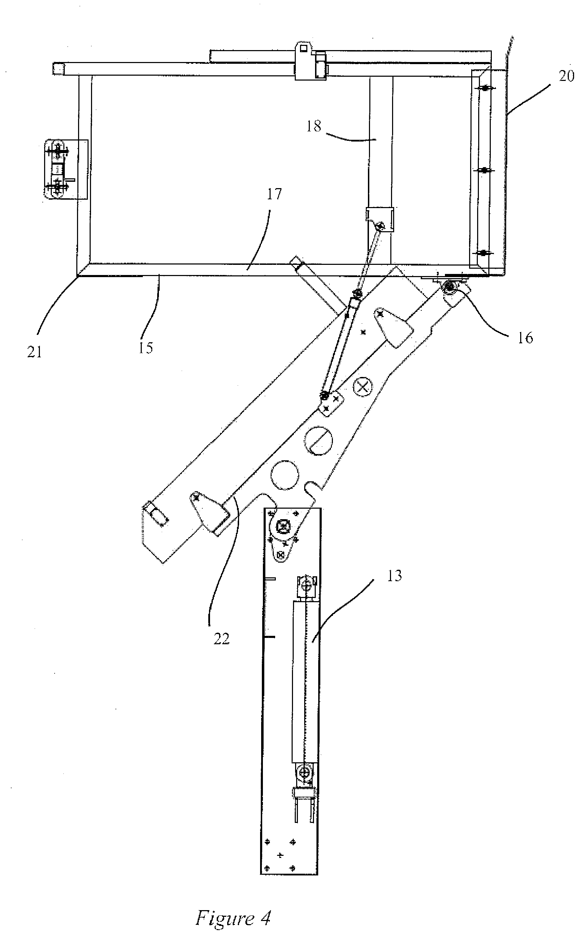

The primary pivot mechanism 14 then pivots the primary pivot arm 11 about the primary arm pivot 12 as shown in figure 3. The degree of rotation of the primary pivot arm 11 is more than 90 degrees so pivoting the primary pivot arm 11 from the vertical and through the horizontal to a resting position with the top of the cage 1 lower than the bottom as shown. In a second step the primary pivot arm 11 is held fixed and the piston 19 extended so rotating the cage 1 back towards the horizontal. In this particular embodiment the secondary pivot arm 15 is rotated until it is horizontal. This is shown in figure 4. The final position of the cage 1 is the unloading position in which the side of the cage 1 containing the aperture 5 is the lower face of the cage 1.

As the secondary pivot arm 15 is pivoted back towards the horizontal the lower face of the cage 1 separates from the waste chute 22 extending between the two primary pivot arms 11. Waste within the cage 1 then falls from the cage 1 through the aperture 5 in the lower face onto the waste chute 22 and away from the cage 1.

Typically the waste that drops from the waste chute 22 is received by a conveyor which transfers the waste to a trailer or compactor.

In an alternative embodiment the secondary pivot arm 15 does not rotate as far back as the horizontal.

In a further alternative embodiment of the invention the container lift 10 comprises only one primary pivot arm 11 and one secondary pivot arm 15.

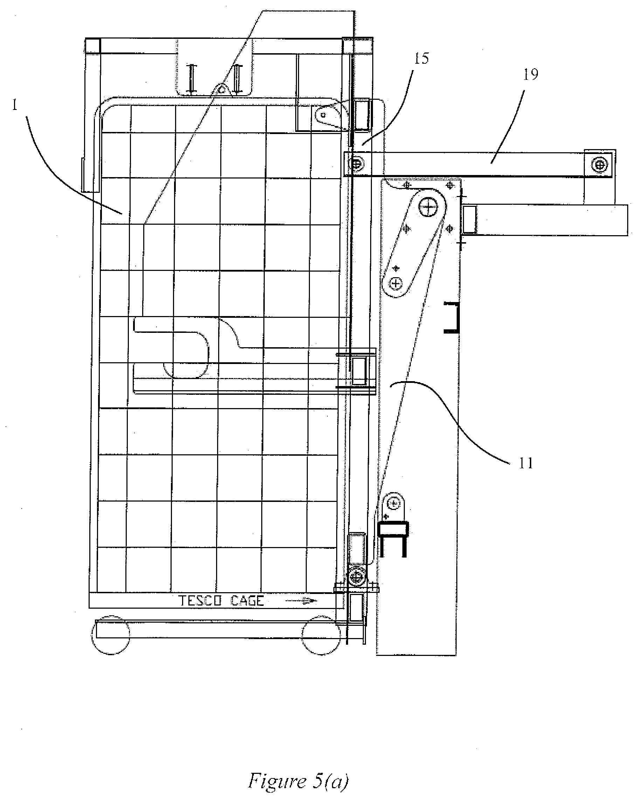

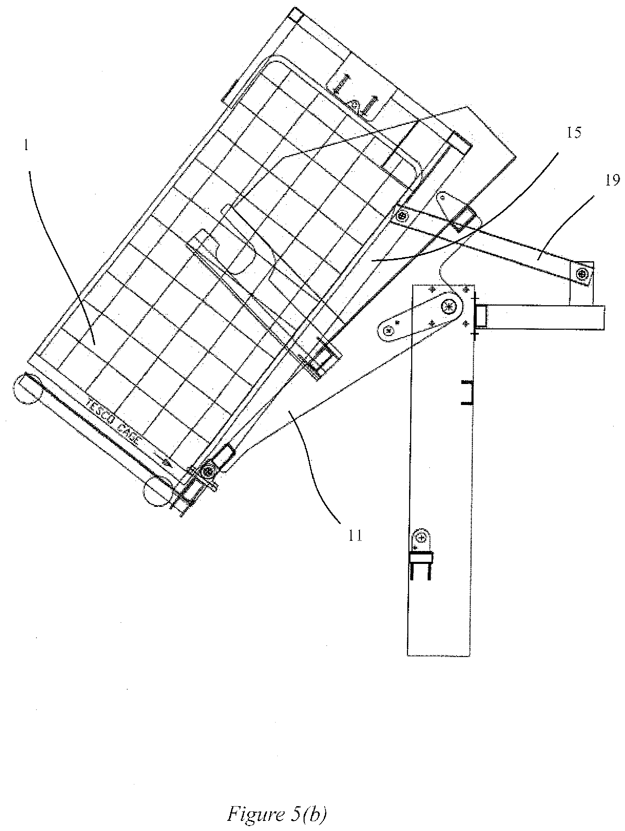

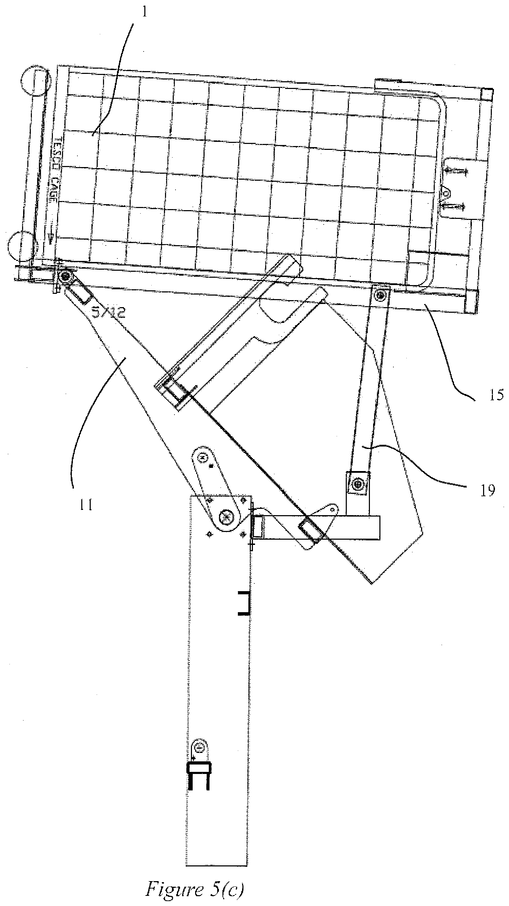

Shown in figures 5(a) to 5(c) is a further embodiment of a container lift according to the invention. The method of emptying the container is similar to that described with reference to figures 2 to 4 except the primary and secondary pivot arms 11, 15 are pivoted simultaneously. In this embodiment the secondary pivot mechanism 19 comprises a plurality of arms linked together and extending between the secondary pivot arm 15 and the fixed support member 13.

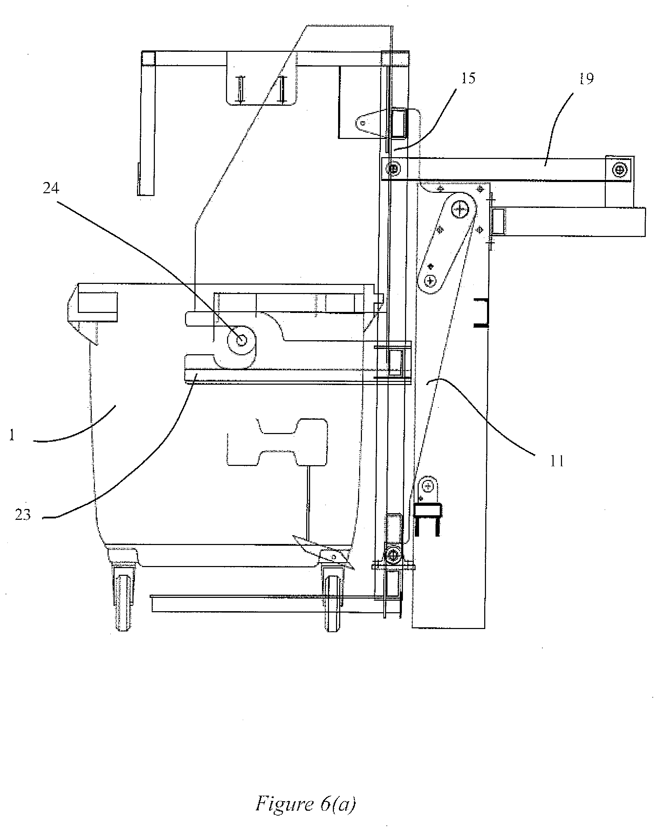

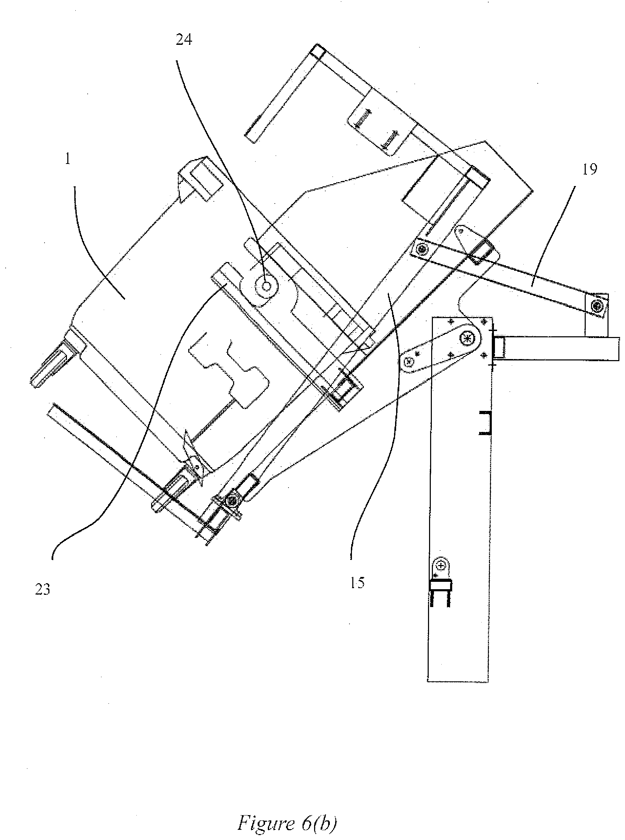

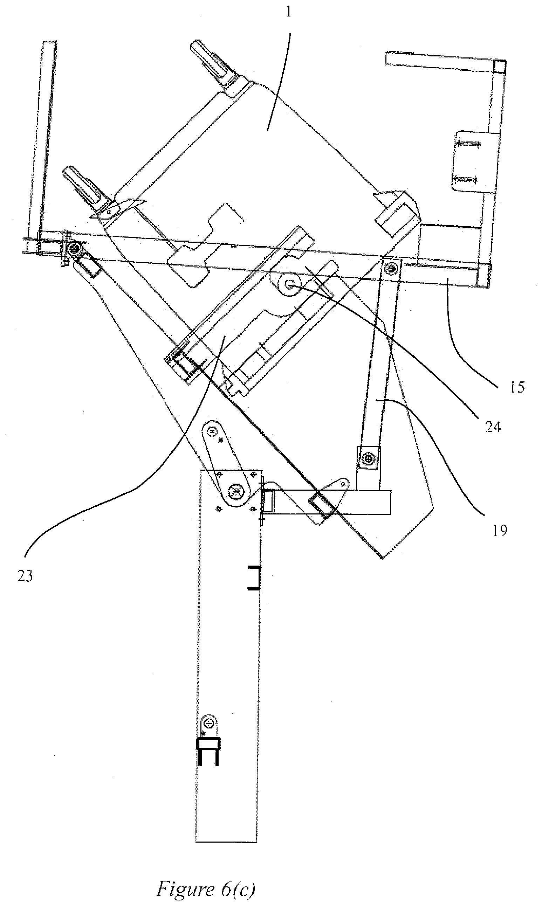

Shown in figures 6(a) to 6(c) is the embodiment of the container lift described with reference to figures 5(a) to 5(c) employed in an alternative method of emptying a container. The container lift comprises a connector 23 in the form of a U shaped pivot point connected to the primary pivot arm 11. A container 1 is arranged adjacent to the pivot arm with a protrusion 24 on the container 1 being received in the U shaped pivot point. The container 1 comprises a mouth defining an aperture in its top face. As the primary pivot arm 11 pivots the container 1 pivots in fixed relation to the primary pivot arm 11 becoming inverted as shown. At the same time as the primary pivot arm 11 pivots in a first direction the secondary pivot mechanism 19 pivots the secondary pivot arm 15 in the opposite direction from a retracted position parallel to the primary pivot arm 11 to an extended position inclined to the primary pivot arm 11. In the extended position the secondary pivot arm 15 abuts the mouth of the container as shown in figure 6(c), so supporting the container 1 whilst the contents of the container 1 drop through the container mouth under gravity.

In this embodiment the connector connected to the secondary pivot arm 15 is optional as it is not required to empty the container 1. It is the connector 23 connected to the primary pivot arm 11 which is used to hold the container 1 in place.

## Claims

1. A combination of a container lift (10) for emptying a container (1) and a container (1), which has an aperture on one side, the container lift (10) comprising at least one primary pivot arm (11) having a primary arm pivot (12) connected thereto; each primary pivot arm (11) having a primary pivot mechanism (14) connected thereto for rotating the primary pivot arm (11) about the primary arm pivot (12);
each primary pivot arm (11) having a secondary pivot arm (15) connected thereto by a secondary arm pivot (16) spaced apart from the primary arm pivot (12);
each secondary pivot arm (15) having a secondary pivot mechanism (19) connected thereto for rotating the secondary pivot arm (15) about the secondary arm pivot (16); each secondary pivot arm (15) comprising a connector (20, 21) for holding the container (1) in substantially fixed relation to the secondary pivot arm (15);
the primary pivot mechanism (14) being adapted to pivot the primary pivot arm (11) in the opposite direction to the direction of pivoting of the secondary pivot arm (15) by the secondary pivot mechanism (19), the pivot mechanisms being adapted such that the secondary pivot arm (15) pivots either simultaneously with or after the primary pivot arm (12) to bring the container (1) into an unloading position
wherein when in the unloading position, the secondary pivot arm (15) is arranged such that the side of the container (1) comprising the aperture is a lower side through which the contents of the container (1) can drop under gravity.

2. A combination as claimed in claim 1, wherein the pivot axes of the primary arm pivot (12) and secondary arm pivot (16) are parallel.

3. A combination as claimed in either of claims 1 or 2, further comprising a fixed support member (13), the primary arm pivot (12) being connected to the fixed support member (13).

4. A combination as claimed in any one of claims 1 to 3, wherein the secondary pivot mechanism (19) comprises an extensible member, preferably a piston, extending between the primary and secondary pivot arms (11, 15).

5. A combination as claimed in claim 3, wherein the secondary pivot mechanism (19) extends between the fixed support member (13) and the secondary pivot arm (15).

6. A combination as claimed in any one of claims 1 to 5, wherein the connector (20, 21) comprises first and second end stops (20, 21) spaced apart on the secondary pivot arm (15) for receiving the container (1) therebetween.

7. A combination as claimed in any one of claims 1 to 6, comprising first and second spaced apart primary pivot arms (11), each primary pivot arm (11) having a secondary pivot arm (15) connected thereto.

8. A combination as claimed in claim 7, comprising a waste chute (22) extending between the first and second primary pivot arms (11).

9. A combination as claimed in any one of claims 1 to 8, further comprising a container (1) connected to the secondary pivot arm (15).

10. A method of emptying a container (1) having an aperture in one side comprising the steps of
providing a container lift (10), the container lift (10) comprising
at least one primary pivot arm (11) having a primary arm pivot (12) connected thereto;
each primary pivot arm (11) having a primary pivot mechanism (14) connected thereto for rotating the primary pivot arm (11) about the primary arm pivot (12); each primary pivot arm (11) having a secondary pivot arm (15) connected thereto by a secondary arm pivot (16) spaced apart from the primary arm pivot (12);
each secondary pivot arm (15) having a secondary pivot mechanism (19) connected thereto for rotating the secondary pivot arm (15) about the secondary arm pivot (16);
each secondary pivot arm (15) comprising a connector (20, 21) for holding the container (1) in substantially fixed relation to the secondary pivot arm (15); the primary pivot mechanism (14) being adapted to pivot the primary pivot arm (11) in the opposite direction to the direction of pivoting of the secondary pivot arm (15) by the secondary pivot mechanism (19), the pivot mechanisms being adapted such that the secondary pivot arm (15) pivots either simultaneously with or after the primary pivot arm (12) to bring the container (1) into an unloading position
connecting the container (1) to the secondary pivot arm (15) with the aperture facing towards the primary pivot arm (11);
pivoting the primary and secondary pivot arms (11, 15) in opposite directions about the primary arm pivot (12) and secondary arm pivot (16) respectively with the secondary pivot arm (15) being pivoted either simultaneously with or after the primary pivot arm (11) to pivot the container (1) to an unloading position;
wherein the container (1) is connected to the secondary pivot arm (15) such that when in the unloading position the side of the container (1) comprising the aperture is a lower side through which the contents of the container (1) can drop under gravity.

11. A method as claimed in claim 10, wherein the primary pivot arm (11) is pivoted through more than 90 degrees and the secondary pivot arm (15) is pivoted partially in the opposite direction.

12. A method as claimed in claim 11, wherein the primary pivot arm (11) is pivoted from an initial substantially vertical orientation through the horizontal and the secondary pivot arm (15) is pivoted back to the horizontal.

## Patentansprüche

1. Kombination eines Behälterhebers (10) zum Entleeren eines Behälters (1) und eines Behälters (1), welcher eine Öffnung an einer Seite aufweist, wobei der Behälterheber (10) mindestens einen primären Schwenkarm (11) mit einer mit diesem verbundenen primären Armschwenkachse (12) umfasst;
wobei jeder primäre Schwenkarm (11) einen mit diesem verbundenen primären Schwenkmechanismus (14) aufweist, um den primären Schwenkarm (11) um die primäre Armschwenkachse (12) zu drehen;
wobei jeder primäre Schwenkarm (11) einen sekundären Schwenkarm (15) aufweist, der mit diesem durch eine sekundäre Armschwenkachse (16) verbunden ist, die von der primären Armschwenkachse (12) beabstandet ist;
wobei jeder sekundäre Schwenkarm (15) einen sekundären Schwenkmechanismus (19) aufweist, der damit verbunden ist, um den sekundären Schwenkarm (15) um die sekundäre Armschwenkachse (16) zu drehen;
wobei jeder sekundäre Schwenkarm (15) einen Verbinder (20, 21) umfasst, um den Behälters (1) in einer im Wesentlichen festen Relation zu dem sekundären Schwenkarm (15) zu halten;
wobei der primäre Schwenkmechanismus (14) geeignet ist, um den primären Schwenkarm (11) in die entgegengesetzte Richtung zur Richtung der durch den zweiten Schwenkmechanismus (19) erzeugten Drehbewegung des zweiten Schwenkarms (15) zu drehen, wobei der Schwenkmechanismus derart ausgebildet ist, dass der zweite Schwenkarm (15) entweder simultan mit dem primären Schwenkarm (12) oder dem primären Schwenkarm (11) nachfolgend dreht, um den Behälter (1) in eine Entleer-Stellung zu bringen,
wobei
in der Entleer-Stellung, der sekundäre Schwenkarm (15) derart angeordnet ist, dass die Seite des Behälters (1), welche die Öffnung aufweist, eine untere Seite bildet, durch welche der Inhalt des Behälters (1) unter der Schwerkraft herausfallen kann.

2. Kombination nach Anspruch 1, wobei die Schwenkachsen der primären Armschwenkachse (12) und der sekundären Armschwenkachse (16) parallel sind.

3. Kombination nach einem der Ansprüche 1 oder 2, ferner umfassend ein festes Stützelement (13), wobei die primäre Armschwenkachse (12) mit dem festen Stützelement (13) verbunden ist.

4. Kombination nach einem der Ansprüche 1 bis 3, wobei der sekundäre Schwenkmechanismus (19) ein ausfahrbares Element, vorzugsweise einen Kolben, umfasst, welcher sich zwischen den primären und den sekundären Schwenkarmen (11, 15) erstreckt.

5. Kombination nach Anspruch 3, wobei sich der sekundäre Schwenkmechanismus (19) zwischen dem festen Stützelement (13) und dem sekundären Schwenkarm (15) erstreckt.

6. Kombination nach einem der Ansprüche 1 bis 5, wobei der Verbinder (20, 21) erste und zweite Endanschläge (20, 21) umfasst, die an dem sekundären Schwenkarm (15) voneinander beabstandet sind, um den Behälter (1) dazwischen aufzunehmen.

7. Kombination nach einem der Ansprüche 1 bis 6, umfassend erste und zweite voneinander beabstandete primäre Schwenkarme (11), wobei jeder primäre Schwenkarm (11) einen mit diesem verbundenen sekundären Schwenkarm (15) aufweist.

8. Kombination nach Anspruch 7, umfassend eine Abfallrutsche (22), die sich zwischen den ersten und den zweiten primären Schwenkarmen (11) erstreckt.

9. Kombination nach einem der Ansprüche 1 bis 8, ferner umfassend einen Behälter (1), der mit dem sekundären Schwenkarm (15) verbunden ist.

10. Verfahren zum Entleeren eines Behälters (1) mit einer Öffnung auf einer Seite, umfassend die Schritte:
Bereitstellens eines Behälterhebers (10), welcher Behälterheber (10)
mindestens einen primären Schwenkarm (11) mit einer daran befestigten primären Armschwenkachse (12) umfasst;
wobei jeder primäre Schwenkarm (11) einen damit verbundenen primären Schwenkmechanismus (14) aufweist, um den primären Schwenkarm (11) um die primäre Armschwenkachse (12) zu drehen;
wobei jeder primäre Schwenkarm (11) einen sekundären Schwenkarm (15) aufweist, der mit diesem über eine sekundäre Armschwenkachse (16) verbunden ist, welcher von der primären Armschwenkachse (12) beabstandet ist;
wobei jeder sekundäre Schwenkarm (15) einen mir diesem verbundenen sekundären Schwenkmechanismus (19) aufweist, um den sekundären Schwenkarm (15) um die sekundäre Armschwenkachse (16) zu drehen;
wobei jeder sekundäre Schwenkarm (15) einen Verbinder (20, 21) umfasst, um den Behälter (1) in einer im wesentlichen festen Relation zu dem sekundären Schwenkarm (15) zu halten;
wobei der primäre Schwenkmechanismus (14) ausgebildet ist, um die primäre Schwenkachse (11) in die entgegengesetzte Richtung zur Richtung der durch den zweiten Schwenkmechanismus (19) erzeugten Drehbewegung des zweiten Schwenkarms (15) zu drehen, wobei der Schwenkmechanismus derart ausgebildet ist, dass der zweite Schwenkarm (15) entweder simultan mit dem primären Schwenkarm (12) oder dem primären Schwenkarm (11) nachfolgend dreht, um den Behälter (1) in eine Entleer-Stellung zu bringen,
Verbinden des Behälters (1) mit dem sekundären Schwenkarm (15) und mit seiner Öffnung zum primären Schwenkarm (11) gerichtet;
Schwenken der primären und der sekundären Schwenkarme in gegenläufige Richtungen um den jeweiligen primären Armdrehpunkt (12) bzw. sekundären Armdrehpunkt (16), und wobei der sekundäre Schwenkarm (15) entweder simultan mit dem primären Schwenkarm (11) oder dem primären Schwenkarm (11) nachfolgend gedreht wird, um den Behälter (1) in eine Entleer-Stellung zu drehen;
wobei
der Behälter (1) mit dem sekundären Schwenkarm (159 derart verbunden ist, dass in der Entleer-Stellung die Seite des Behälters, welche die Öffnung umfasst, eine untere Seite ist, durch welche der Inhalt des Behälters unter der Schwerkraft fallen kann.

11. Verfahren nach Anspruch 10, wobei der primäre Schwenkarm (11) um mehr als 90 Grad geschwenkt wird und der sekundäre Schwenkarm (15) teilweise in die entgegengesetzte Richtung geschwenkt wird.

12. Verfahren nach Anspruch 11, wobei der primäre Schwenkarm (11) von einer anfänglichen im Wesentlichen vertikalen Ausrichtung durch die Horizontale geschwenkt wird und der sekundäre Schwenkarm (15) zurück in die Horizontale geschwenkt wird.

## Revendications

1. Combinaison d'un élévateur de récipient (10) pour le vidange d'un récipient et d'un récipient (1) présentant une ouverture sur un côté, l'élévateur de récipient (10) comprenant :
au moins un bras de pivotement primaire (11) présentant un pivot de bras primaire (12) connecté à celui-ci ;
chaque bras de pivotement primaire (11) présentant un mécanisme de pivotement primaire (14) connecté à celui-ci pour faire pivoter le bras de pivotement primaire (11) autour du pivot de bras primaire (12) ;
chaque bras de pivotement primaire (11) présentant un bras de pivotement secondaire (15) connecté à celui-ci par un pivot de bras secondaire (16) espacé du bras de pivot primaire (12) ;
chaque bras de pivotement secondaire (15) présentant un mécanisme de pivotement secondaire (19) connecté à celui-ci pour faire pivoter le bras de pivotement secondaire (15) autour du pivot de bras secondaire (16) ;
chaque bras de pivotement secondaire (15) comprenant un connecteur (20, 21) pour retenir le récipient dans une relation sensiblement fixe par rapport au bras de pivotement secondaire (15) ;
le mécanisme de pivotement primaire (14) étant adapté à faire pivoter le bras de pivotement primaire (11) dans une direction opposée à la direction de pivotement du bras de pivotement secondaire (15) par le biais du mécanisme de pivotement secondaire (19), les mécanismes de pivotement étant adaptés de telle sorte que le bras de pivotement secondaire (15) pivote soit de manière simultanée avec, soit après, le pivot de bras primaire (12), afin d'amener le récipient dans une position de déchargement ;
selon laquelle, lors de la position de déchargement, le bras de pivotement secondaire (15) est organisé de telle sorte que le côté du récipient (1) comprenant l'ouverture est un côté inférieur à travers lequel le contenu du récipient (1) peut tomber par effet de pesanteur.

2. Combinaison selon la revendication 1, selon laquelle les axes de pivot du pivot de bras primaire (12) et du pivot de bras secondaire (16) sont en parallèle.

3. Combinaison selon la revendication 1 ou la revendication 2, comprenant en outre un membre de support fixe (13), le pivot de bras primaire (12) étant connecté au membre de support fixe (13).

4. Combinaison selon l'une quelconque des revendications 1 à 3, selon laquelle le mécanisme de pivotement secondaire (19) comprend un membre extensible, de préférence un piston, s'étendant entre les bras de pivotement primaire et secondaire (11,15).

5. Combinaison selon la revendication 3, selon laquelle le mécanisme de pivotement secondaire (19) s'étend entre le membre de support fixe (13) et le bras de pivotement secondaire (15).

6. Combinaison selon l'une quelconque des revendications 1 à 5, selon laquelle le connecteur (20, 21) comprend des première et deuxième butées d'arrêt (20, 21) espacées l'une de l'autre le long du bras de pivotement secondaire (15) pour recevoir le récipient (1) entre celles-ci.

7. Combinaison selon l'une quelconque des revendications 1 à 6, comprenant des premier et deuxième bras de pivotement primaires (11) espacés l'un de l'autre, chaque bras de pivotement primaire (11) présentant un bras de pivotement secondaire connecté à celui-ci.

8. Combinaison selon la revendication 7, comprenant une chute à déchets (22) s'étendant entre les premier et deuxième bras de pivotement primaires (11).

9. Combinaison selon l'une quelconque des revendications 1 à 8, comprenant en outre un récipient (1) connecté au bras de pivotement secondaire (15).

10. Procédé de vidange d'un récipient (1) présentant une ouverture d'un côté comprenant les étapes de :
fourniture d'un élévateur de récipient (10), l'élévateur comprenant :
au moins un bras de pivotement primaire (11) présentant un pivot de bras primaire (12) connecté à celui-ci ;
chaque bras de pivotement primaire (11) présentant un mécanisme de pivotement primaire (14) connecté à celui-ci pour faire pivoter le bras de pivotement primaire (11) autour du pivot de bras primaire (12) ;
chaque bras de pivotement primaire (11) présentant un bras de pivotement secondaire (15) connecté à celui-ci par un pivot de bras secondaire (16) espacé du bras de pivot primaire (12) ;
chaque bras de pivotement secondaire (15) présentant un mécanisme de pivotement secondaire (19) connecté à celui-ci pour faire pivoter le bras de pivotement secondaire (15) autour du pivot de bras secondaire (16) ;
chaque bras de pivotement secondaire (15) comprenant un connecteur (20, 21) pour retenir le récipient dans une relation sensiblement fixe par rapport au bras de pivotement secondaire (15) ;
le mécanisme de pivotement primaire (14) étant adapté à faire pivoter le bras de pivotement primaire (11) dans une direction opposée à la direction de pivotement du bras de pivotement secondaire (15) par le biais du mécanisme de pivotement secondaire (19), les mécanismes de pivotement étant adaptés de telle sorte que le bras de pivotement secondaire (15) pivote soit de manière simultanée avec, soit après, le pivot de bras primaire (12), afin d'amener le récipient dans une position de déchargement ;
la connexion du récipient (1) au bras de pivotement secondaire (15) avec l'ouverture faisant face au bras de pivotement primaire (11) ;
le pivotement des bras de pivotement primaire et secondaire (11, 15) dans des directions opposées autour du pivot de bras de pivotement primaire (12) et du pivot de bras de pivotement secondaire (16) respectivement, le bras de pivotement secondaire (15) pivotant soit de manière simultanée avec, soit après, le bras de pivotement primaire (11) afin de faire pivoter le récipient (1) dans une position de déchargement ;
procédé selon lequel :
le récipient (1) est connecté au bras de pivotement secondaire (15) de telle sorte que, lors de la position de déchargement, le côté du récipient (1) comprenant l'ouverture est un côté inférieur à travers lequel le contenu du récipient (1) peut tomber par effet de pesanteur.

11. Procédé selon la revendication 10, selon lequel le bras de pivotement primaire (11) pivote à travers un angle de plus de 90° et le bras de pivotement secondaire (15) pivote partiellement dans une direction opposée.

12. Procédé selon la revendication 11, selon lequel le bras de pivotement primaire (11) pivote depuis une orientation initiale sensiblement verticale à travers une position horizontale et le bras de pivotement secondaire (15) pivote vers la position horizontale.
